# EUROPEAN PATENT SPECIFICATION

(11) **EP 1 598 727 B1**
(45) Date of publication and mention of the grant of the patent: **09.04.2008**
(21) Application number: 05010771.3
(22) Date of filing: 18.05.2005
(51) Int. Cl.: G05G 9/047, G06F 3/00, G06F 3/033, G05G 5/03

(54) **Haptic feedback input device**
Eingabegerät mit haptischer Rückkopplung
Dispositif d'entrée à retour haptique

(30) Priority: 19.05.2004 JP 2004149302
(43) Date of publication of application: 23.11.2005
(73) Proprietor: ALPS ELECTRIC CO., LTD., Tokyo 145-8501 (JP)
(72) Inventor: Ishikawa, Shinji, Ota-ku, Tokyo 145-8501 (JP)
(74) Representative: Klunker . Schmitt-Nilson . Hirsch

(56) References cited:
- EP-A- 1 205 956
- FR-A- 2 706 141
- US-A- 4 101 863
- US-B1- 6 400 352

## Description

### 1. Field of the Invention

The present invention relates to a haptic feedback input device according to the preamble of claim 1.

### 2. Description of the Related Art

In recent years, there have been proposed various haptic feedback input devices having a force feedback function which integrates control functions of controllers for a car air conditioner, a car audio, a car navigator, etc., and supplies feedback force, such as resisting force or thrusting force, to an operating member according to the operating amount or direction of the operating member when a device to be controlled is selected or a function is adjusted by the operating member operated by hand, thereby providing satisfactory operation feeling and improving the operability of the operating member. In the related art, for example, there has been known a haptic feedback input device including an operating lever that is free to move and that serves as an operating member; a converting unit that converts the rocking movement of the operating lever into the swinging motions of a pair of driving levers perpendicular to each other; a pair of rotary encoders that detect the swinging amount and direction of the pair of driving levers; and a pair of rotary motors that respectively apply feedback force to the operating lever. This device drives two rotary motors based on the output signals from the rotary encoders to supply desired feedback force to the operating lever via two driving levers (for example, see Japanese Unexamined Patent Application Publication No. 2003-22159 (pages 5 to 7 and FIG. 1)).

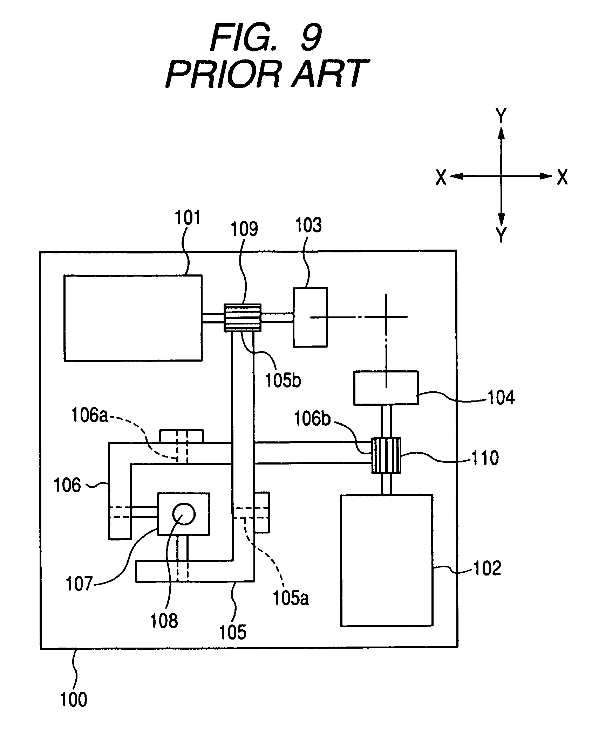

FIG. 9 is a plan view showing the internal structure of the haptic feedback input device disclosed in Patent Document 1. As shown in FIG. 9, first and second rotary motors 101 and 102 and first and second rotary encoders 103 and 104 coupled with rotary shafts of the rotary motors 101 and 102 are mounted on a base 100. The rotary shaft of the first rotary motor 101 is perpendicular to the rotary shaft of the second rotary motor 102, and the first and second rotary encoders 103 and 104 are disposed in the vicinity of an intersection P of the rotary shafts of the two rotary motors 101 and 102. In addition, first and second driving levers 105 and 106 free to swing are supported on the base 100, and an operating lever 108 is coupled with the driving levers 105 and 106 via a driving body 107. The first driving lever 105 can swing around a shaft 105a parallel to the rotary shaft of the first rotary motor 101, and the front end of the first driving lever 105 is provided with a teeth portion 105b engaging with a gear 109 fixed to the rotary shaft of the first rotary motor 101. The second driving lever 106 can swing around a shaft 106a parallel to the rotary shaft of the second rotary motor 102, and the front end of the second driving lever 106 is provided with a teeth portion 106b engaging with a gear 110 fixed to the rotary shaft of the second rotary motor 102. In addition, the first and second rotary motors 101 and 102 and the first and second rotary encoders 103 and 104 are connected to a control unit (not shown), and the control unit acquires the output signals from the first and second rotary encoders 103 and 104, and outputs desired control signals to the first and second rotary motors 101 and 102.

In the haptic feedback input device having the above-mentioned schematic structure, when an operator moves the operating lever 108 in a certain direction, for example, in the Y-Y direction of FIG. 9, the first driving lever 105 swings around the shaft 105a, accordingly the gear 109 and the first rotary encoder 103 are rotated. When the operating lever 108 is moved in the X-X direction, the second driving lever 106 swings around the shaft 106a, accordingly the gear 110 and the second rotary encoder 104 are rotated. Also, when the operating lever 108 is moved in a direction between the X and Y directions, the first and second driving levers 105 and 106 swing respectively, and the first and second rotary encoders 103 and 104 are rotated. The control unit acquires the output signals from the rotary encoders 103 and 104, and computes the swinging direction and amount of the first and second driving levers 105 and 106, that is, the moving direction and amount (moving angle) of the operating lever 108, based on the output signals, and then outputs control signals to the first and second rotary motors 101 and 102 based on the computing results. Therefore, desired operation feeling is supplied to the operating lever 108. For example, if the operating lever 108 is moved in a certain direction at a certain angle and thus the first and second rotary motors 101 and 102 are rotated in an opposite direction to the swinging motions of the first and second driving levers 105 and 106, a certain degree of operation force is applied to the operating lever 108, and then the operator operating the operating lever 108 by hand can feel this operation force as a click sense.

Meanwhile, in the haptic feedback input device in the related art, time delay in mechanically transmitting operation force from the operating lever to the rotary encoder, the response time of the rotary encoder, the calculation time of the control unit, the response time of the rotary motor, and time delay in mechanically transmitting feedback force from the rotary motor to the operating lever are added to the time when feedback force is fed back to the operating member during the manual operation. Therefore, time lag occurs until the operator operating the operating member can feel feedback force. This time lag brings about various problems in applications of the haptic feedback input device.

For example, in an application in which a cursor is moved by the operating member to select a desired button among a plurality of menu buttons displayed on a screen, it is general to set pulling force around each button to facilitate button selection, and the operator feels the pulling force as feedback force from the rotary motor. However, when the cursor is moved from a menu button (A) to a desired menu button (B), due to the pulling force of the menu button (A), the cursor may pass the menu button (B), that is, the cursor cannot be controlled correctly by the operating member. This phenomenon arises from a large inertial force of the rotary motor. Therefore, in order to keep the inertial force at a low level, it is preferable to apply resisting force, which is proportional to the operation speed of the operating lever, to the operating lever from the rotary motor, and to suppress the increase in the rotation speed of the rotary motor so that inertial force does not increase. However, it is practically impossible to supply resisting force to the operating lever without delay since the speed of the operating lever varies instantaneously during operation. As such, the increase in the rotation speed of the rotary motor cannot be suppressed, and the inertial force of the rotary motor cannot be decreased. Therefore, the haptic feedback input device in the related art has a problem of the timing for applying feedback force to the operating lever being delayed.

In addition, in the haptic feedback input device in the related art, when swinging motions of the driving levers that swing in conjunction with the operating lever are transmitted to code plates of the rotary encoders via an acceleration gear train, it is possible to improve the resolution of detection accuracy using inexpensive rotary encoders. However, if the acceleration gear train is provided in addition to the deceleration gear train which transmits the rotation of the rotary motors to the driving levers, backlash between the two gear trains causes jarring in two transmitting mechanisms, that is, a driving system and a detecting system, and the jarring deteriorates the operation feeling.

In accordance with the preamble of claim 1, US-A-6,400,352 discloses a haptic feedback input device, in which the friction resistance supplying unit is formed by an active idler which is pressed against the surface of a belt which connects the operating member with a force transmitting mechanism.

US-A-4,101,863 discloses an angular movement resolver in which a serrated segment is engaged with a correspondingly serrated lever biased into engagement with the serrated segment by a spring. Thereby, frictional resistance is provided to the movement of a pivoting member in order to damp undesired small movements thereof.

### SUMMARY OF THE INVENTION

It is an object of the invention to provide a haptic feedback input device capable of alleviating the influence of delay in supplying feedback force to an operating member from actuators.

In order to achieve the above object, a haptic feedback input device includes the features of claim 1.

In the haptic feedback input device as constructed above, since the friction resistance supplying unit steadily supplies friction resistance to the movable member operating in conjunction with the manual operation of the operating member, resistance force is supplied to the operating member even when the control of the actuators is delayed, and the resistance force becomes large even right after the speed of the operating member varies. Therefore, the influence of delay in supplying feedback force to the operating member from the actuators can be alleviated, and the time lag until the feedback force is fed back to the operating member during the manual operation can be decreased.

Preferred embodiments are defined by the dependent claims.

In such a joystick type haptic feedback input device, it is preferable that the friction resistance supplying units be leaf springs that urge the driving levers to the respective swinging shafts. In this way, friction resistance can be supplied steadily to the driving levers, which are movable members, with a simple configuration.

Further, in the above-mentioned joystick type haptic feedback input device, it is preferable that the actuators be a pair of rotary motors that supply feedback force to the operating lever via the driving levers, and that the rotary motors be coupled with the driving levers via a deceleration gear train. With the above-mentioned configuration, feedback force can be supplied to the operating lever by small-size rotary motors, and it is possible to prevent the cursor from passing by a desired menu button due to the inertial force of the rotary motors.

In this case, it is preferable that the displacement detecting units be rotary encoders, that a rotation transmitting mechanism, serving as a movable member, be provided between a code plate of the rotary encoder and the driving lever, that the rotation transmitting mechanism have a pair of pulleys coupled with each other via a belt, and that tensioners that supply tension to the belts be used as the friction resistance supplying units. With this configuration, the jarring in the transmitting mechanism of a detecting system from the driving levers to the rotary encoders is reduced by the tensioners, and the influence of the jarring in the transmitting mechanism of the driving system from the rotary motors to the driving levers is alleviated by the leaf springs. Therefore, it is possible to suppress the time lag until feedback force is fed back to the operating lever during manual operation, and it is possible to obtain a good operation feeling during the manual operation of the operating lever.

### BRIEF DESCRIPTION OF THE DRAWINGS

- FIG. 1: is a perspective view of a haptic feedback input device according to an embodiment of the invention;
- FIG. 2: is a cross-sectional view taken along one direction of the haptic feedback input device;
- FIG. 3: is a cross-sectional view taken along another direction of the haptic feedback input device;
- FIG. 4: is a perspective view of a stick controller as viewed from one direction;
- FIG. 5: is a perspective view of the stick controller as viewed from another direction;
- FIG. 6: is a perspective view of a power conversion mechanism;
- FIG. 7: is a plan view illustrating the layout of parts constituting the stick controller;
- FIG. 8: is a block diagram of a control unit; and
- FIG. 9: is a plan view illustrating the internal structure of a haptic feedback input device in the related art.

### DESCRIPTION OF THE PREFERRED EMBODIMENT

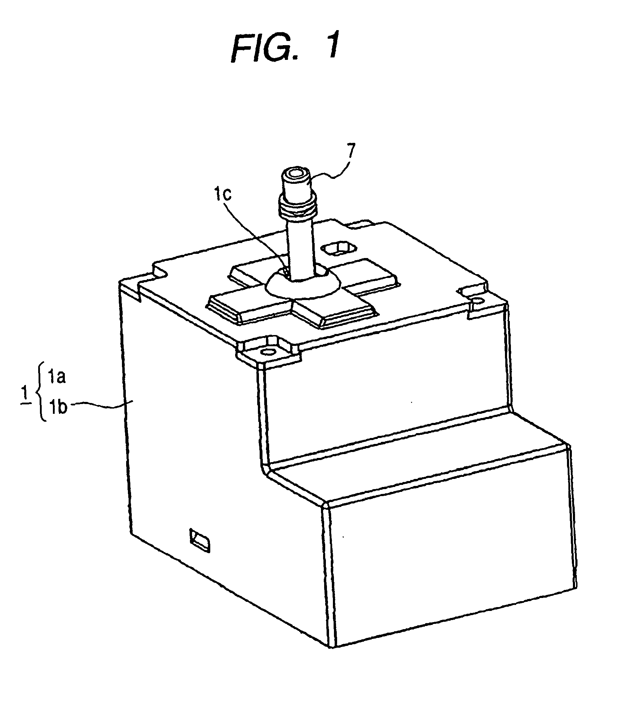

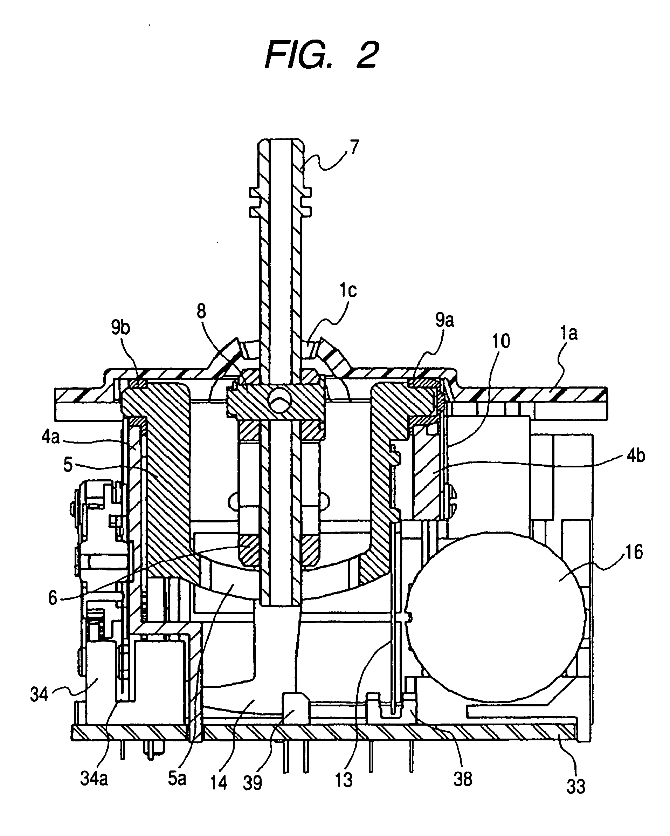

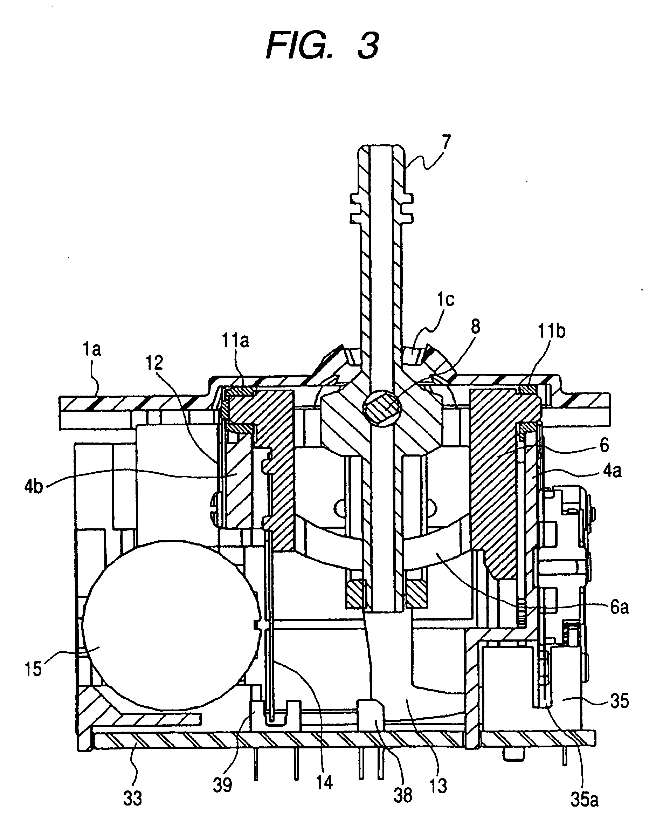

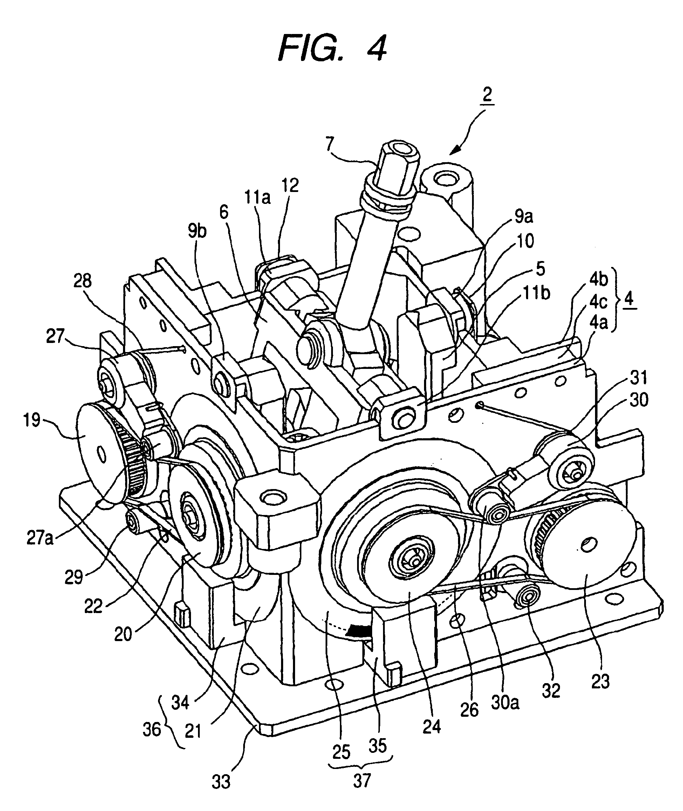

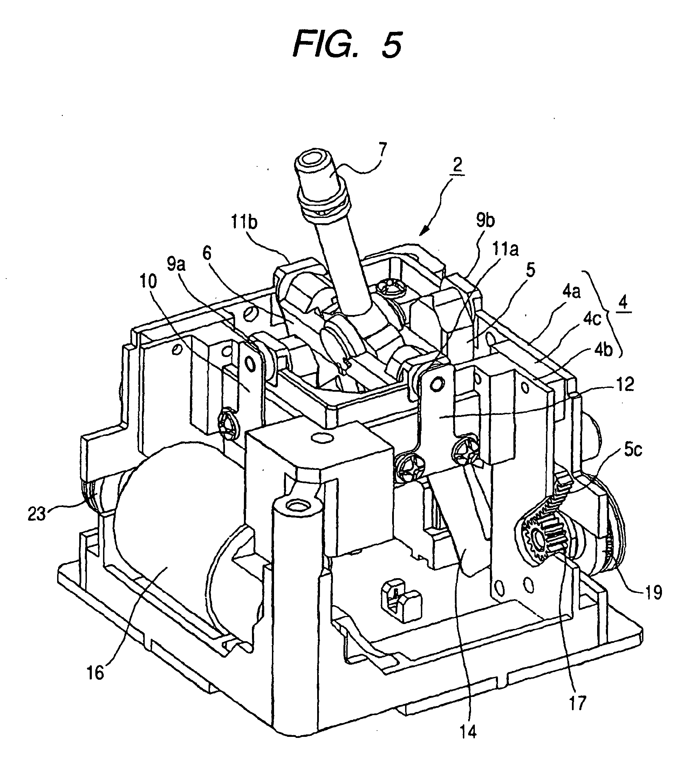

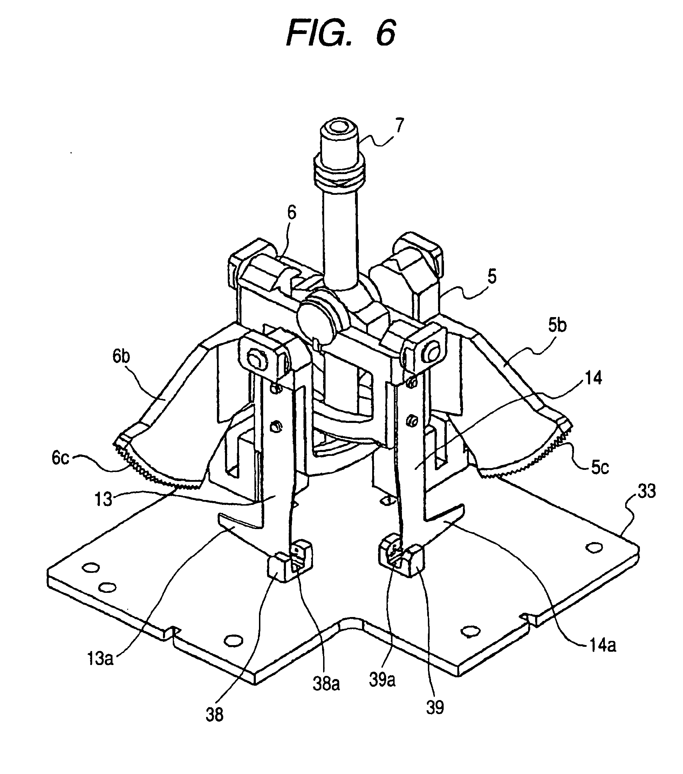

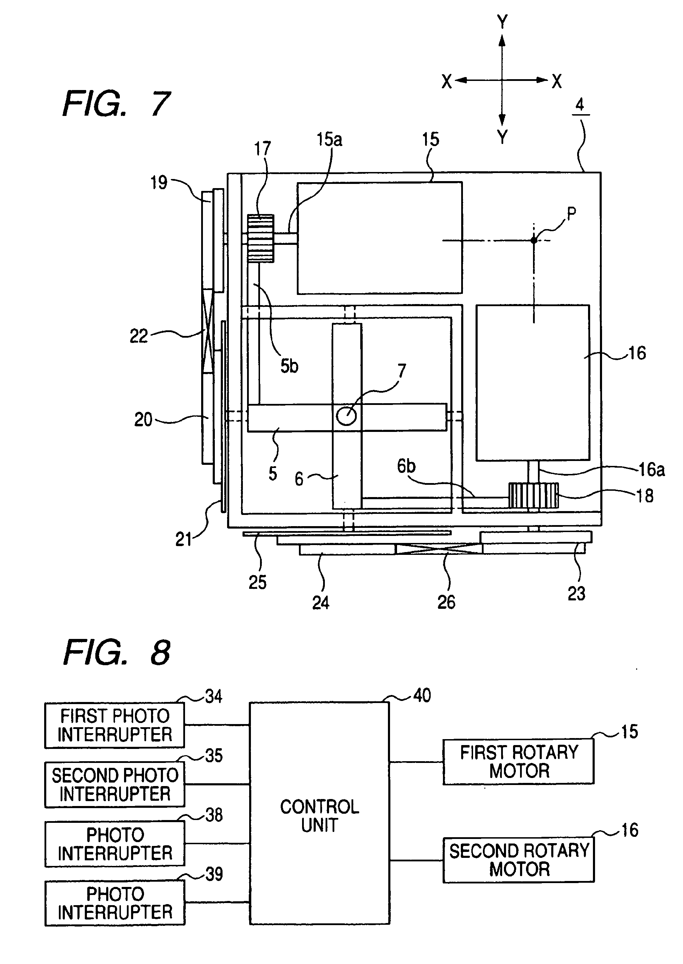

An embodiment of the invention will be described with reference to the accompanying drawings. FIG. 1 is a perspective view of a haptic feedback input device according to an embodiment of the invention, and FIG. 2 is a cross-sectional view taken along one direction of the haptic feedback input device. FIG. 3 is a cross-sectional view taken along another direction of the haptic feedback input device, and FIG. 4 is a perspective view of a stick controller, as viewed from one direction. FIG. 5 is a perspective view of the stick controller, as viewed from another direction, and FIG. 6 is a perspective view of a power conversion mechanism. FIG. 7 is a plan view illustrating the layout of parts constituting the stick controller, and FIG. 8 is a block diagram of a control unit.

As shown in FIGS. 1 to 3, the haptic feedback input device according to the embodiment of the invention includes a synthetic resin chassis 1 and a stick controller 2 encased in the chassis 1. The chassis 1 can be mounted at a proper place, such as a vehicle center console. The chassis 1 is composed of a top plate 1a and a side plate 1b integrated with each other, and a bottom plate (not shown) that shuts a bottom opening of the side plate 1b, and a hole 1c is provided at the center of the top plate 1a. Meanwhile, the side plate 1b is not shown in FIGS. 2 and 3.

As shown in FIGS. 4 and 5, the stick controller 2 includes a box-shaped frame (base) 4, and the frame 4 is composed of a first supporting body 4a having an L shape in plan view and a second supporting body 4b having a reversed L shape that are integrated with each other via a spacer 4c. The first and second supporting bodies 4a and 4b are made of a material having high mechanical strength, such as aluminum, and the frame 4 is provided with a supporting unit having a rectangle in plan view along each wall of the first and second supporting bodies 4a and 4b. In the supporting unit, first and second driving levers 5 and 6 are disposed such that rotary shafts thereof are perpendicular to each other, and both ends of an upper portion of the first driving lever 5 are journaled at two walls of the supporting unit facing each other, and both ends of an upper portion of the second driving lever 6 are journaled at the other two walls of the supporting unit facing each other. An operating lever 7 is coupled with an intersection between the first and second driving levers 5 and 6, and passes through the hole 1a to protrude outwards from the chassis 1. The first and second driving levers 5 and 6 constitute a power conversion mechanism that converts the rocking movement of the operating lever 7 into two perpendicular swinging motions, and an intermediate portion of the operating lever 7 is journaled at an intermediate portion of the upper portion of the second driving lever 6 with a pin 8. The operating lever 7 passes through a long hole 6a formed at the lower portion of the second driving lever 6, and is inserted into a long hole 5a formed at the lower portion of the first driving lever 5. Therefore, when the operating lever 7 is moved in a certain direction, the first and second driving levers 5 and 6 swing in accordance with the moving direction.

Herein, the swinging shaft of the first driving lever 5 is supported by the supporting portion of the frame 4 via a pair of bearings 9a and 9b, and a bearing 9a is urged to the other bearing 9b with the elastic force of a reverse T-shaped leaf spring 10 fixed to the outer wall of the second supporting body 4b with screws. Similarly, the swinging shaft of the second driving lever 6 is supported by the supporting portion of the frame 4 via a pair of bearings 11 a and 11 b, and a bearing 11a is urged to the other bearing 11b with the elastic force of a reverse T-shaped leaf spring 12 fixed to the outer wall of the second supporting body 4b with screws. That is, the leaf springs 10 and 12 constitute a first friction resistance supplying unit that supplies friction resistance to the first and second driving levers 5 and 6 swinging in conjunction with the hand-operation of the operating lever 7. Thus, the leaf springs 10 and 12 steadily supply friction resistance to the first and second driving levers 5 and 6 in the thrusting directions of the swinging shafts.

As shown in FIG. 6, a fan-shaped gear portion 5b is formed at one side of the first driving lever 5, and a teeth portion 5c extending circularly around the swinging shaft of the driving lever 5 is formed at the front end of the gear portion 5b. In addition, a first swing arm 13 is fixed to the other side of the first driving lever 5, and a blocking portion 13a formed at the lower end of the first swing arm 13 protrudes in the opposite direction of the gear portion 5b. Similarly, a fan-shaped gear unit 6b is formed at one side of the second driving lever 6, and a teeth portion 6c extending circularly around the swinging shaft of the driving lever 6 is formed at the front end of the gear portion 6b. In addition, a second swing arm 14 is fixed to the other side of the second driving lever 6, and a blocking portion 14a formed at the lower end of the second swing arm 14 protrudes in the opposite direction of the gear portion 6b.

First and second rotary motors 15 and 16 are mounted on the second supporting body 4b of the frame 4, as shown in FIG. 7, such that rotary shafts 15a and 16a thereof are perpendicular to each other. If the intersection at which both extended imaginary lines of rotary shafts 15a and 16a of the rotary motors 15 and 16 intersect each other at right angles is indicated by a point P, the rotary shaft 15a of the first rotary motor 15 protrudes in the opposite direction of the intersection P, and the rotary shaft 16a of the second rotary motor 16 also protrudes in the opposite direction of the intersection P. A gear 17 is fixed to the rotary shaft 15a of the first rotary motor 15, and is engaged with the teeth portion 5c of the gear portion 5b formed at the first driving lever 5 inside the first supporting body 4a. Although the first rotary motor 15 is not illustrated in FIG. 5 for the sake of the convenience of explanation, the gear 17 fixed to the rotary shaft 15a and the gear portion 5b integrated with the first driving lever 5 constitute a deceleration gear train, as viewed from the first rotary motor 15. The rotation of the first rotary motor 15 is decelerated by the deceleration gear train and is then transmitted to the first driving lever 5. Similarly, a gear 18 is fixed to the rotary shaft 16a of the second rotary motor 16, and is engaged with the teeth portion 6c of the gear portion 6b formed at the second driving lever 6 inside the first supporting body 4a. The gear 18 and the gear portion 6b constitute a deceleration gear train, as viewed from the second rotary motor 16, and the rotation of the second rotary motor 16 is decelerated by the deceleration gear train and is then transmitted to the second driving lever 6.

A front end pulley 19 is fixed to the rotary shaft 15a of the first rotary motor 15, and is integrated with the gear 17. The front end pulley 19 protrudes outward from a side wall of the first supporting body 4a, and the first code plate 21 having a rear end pulley 20 is journaled at the above side wall of the first supporting body 4a. An endless belt 22 is wound along the front and rear end pulleys 19 and 20, and uneven portions are respectively provided on the outer circumferential surfaces of the two pulleys 19 and 20 and the inner surface of the belt 22 to prevent a slip between the pulleys 19 and 20 and the belt 22. Also, the gear 17, the front end pulley 19, the belt 22, and the rear end pulley 20 constitute an acceleration gear train, as viewed from the first driving lever 5, and the swinging of the first driving lever 5 is accelerated by the acceleration gear train and is then transmitted to the first code plate 21. Similarly, a front end pulley 23 is fixed to the rotary shaft 16a of the first rotary motor 16, and is integrated with the gear 18. The front end pulley 23 protrudes outward from another side wall of the first supporting body 4a, and a second code plate 25 having a rear end pulley 24 is journaled at the above side wall of the first supporting body 4a such that it can rotate. An endless belt 26 is wound along the front and rear end pulleys 23 and 24, and uneven portions are respectively provided on the outer circumferential surfaces of the two pulleys 23 and 24 and the inner surface of the belt 26 to prevent a slip between the pulleys 23 and 24 and the belt 26. Also, the gear 18, the front end pulley 23, the belt 26, and the rear end pulley 24 constitute an acceleration gear train, as viewed from the second driving lever 6. The swinging of the second driving lever 6 is accelerated by the acceleration gear train and is then transmitted to the second code plate 25.

In addition, a tensioner 27 is rotatably supported by a side wall of the first supporting body 4a, and the tensioner 27 is urged to swing in a direction with a reverse coil spring 28. A roller 27a is journaled at the front end of the tensioner 27, and is urged to a counter roller 29 journaled at the one side wall of the first supporting body 4a to supply tension to the belt 22 coupling the two pulleys 19 and 20. Similarly, a tensioner 30 is rotatably supported by another side wall of the first supporting body 4a, and the tensioner 30 is urged to swing in a direction with a reverse coil spring 31. A roller 30a is journaled at the front end of the tensioner 30, and is urged to a counter roller 32 journaled at the upper side wall of the first supporting body 4a to supply tension to the belt 26 coupling the two pulleys 23 and 24. That is, the tensioners 27 and 30 constitute a second friction resistance supplying unit that supplies friction resistance to the acceleration gear train that operates in conjunction with the hand-operation of the operating member 7, and the tensioners 27 and 30 steadily supply friction resistance to the belts 22 and 26, which are components of the acceleration gear train, in the compression direction.

A circuit substrate 33 is attached to the lower end of the frame 4, and first and second photo interrupters 34 and 35 are mounted on the circuit substrate 33. Although not shown, the two photo interrupters 34 and 35 each have an LED (light-emitting element) and a phototransistor (light-receiving element), and the LED and the phototransistor face each other with a recessed portion 34a or 35a interposed therebetween. The outer circumferential portions of the first and second code plates 21 and 25 rotate in the recessive portions 34a and 35a of the first and second photo interrupters 34 and 35, respectively, and a number of slits are formed in the outer circumferential portions of the first and second code plates 21 and 25, respectively. Also, the first photo interrupter 34 and the first code plate 21 constitute a first rotary encoder 36, and the second photo interrupter 35 and the second code plate 25 constitute a second rotary encoder 37. In addition, the first and second rotary encoders 36 and 37 detect the relative dislocation amount of the operating lever 7. That is, when the first and second driving levers 5 and 6 swing in accordance with the movement of the operating lever 7, the swinging motion is transmitted to the first and second code plates 21 and 25 via the acceleration gear train, and the photo interrupters 34 and 35 of the first and second rotary encoders 36 and 37 respectively outputs two kinds of pulse signals (A-phase signal and B-phase signal) having a phase difference of 90 degrees. Therefore, it is possible to detect the relative swinging amounts and directions of the first and second driving levers 5 and 6, that is, the moving direction and amount (moving angle) of the operating lever 7 based on the output signals.

As shown in FIGS. 2, 3, and 6, another pair of photo interrupters 38 and 39, in addition to the first and second photo interrupters 34 and 35, are mounted on the circuit substrate 33, and the photo interrupters 38 and 39 each has an LED (light-emitting element) and a phototransistor (light-receiving element) that face each other with a recessed portion 38a or 39a interposed therebetween. The blocking portion 13a of the first swing arm 13 passes through the recessed portion 38a of the photo interrupter 38 in accordance with the swinging of the first driving lever 5, and the blocking unit 14a of the second swing arm 14 passes through the recessed portion 39a of the photo interrupter 39 in accordance with the swinging of the second driving lever 6. In addition, the first swing arm 13 and the photo interrupter 38, and the second swing arm 14 and the photo interrupter 39 constitute absolute position detecting units, respectively. In this case, each of the blocking portions 13a and 14a of the first and second swing arms 13 and 14 occupies half a rotatable area of each of the first and second swing arms 13 and 14. For example, when the first and second swing arms 13 and 14 swing as much as 30 degrees from their neutral positions in either direction (therefore, total 60 degrees), the blocking portions 13a and 14a protrude as much as 30 degrees in a direction from the neutral positions of the first and second swing arms 13 and 14. Therefore, when the operating lever 7 stands on its neutral position, the blocking portions 13a and 14a protrude outwards by the swinging angles of the first and second swing arms 13 and 14 from the centers of the recessed portions 38a and 39a to one direction thereof, so that the outputs of the photo interrupters 38 and 39 are changed at that positions. Therefore, when the operating lever 7 is moved in a certain direction from its neutral position, and the first and second driving levers 5 and 6 swing accordingly. At that time, when the blocking portions 13a and 14a pass through the recessed portions 38a and 39a, light components emitted from the LEDs are blocked by the blocking portions 13a and 14a, and then the photo interrupters 38 and 39 output OFF signals. However, if the blocking portions 13a and 14a move away from the recessed portions 38a and 39a, the phototransistors receive the light components emitted from the LEDs, and then the photo interrupters 38 and 39 output ON signals.

As shown in FIG. 8, the respective photo interrupters 34, 35, 38, and 39 and the first and second rotary motors 15 and 16 are connected to a control unit 40, and the control unit 40 has a CPU, a memory, etc., therein. The CPU acquires output signals from the respective photo interrupters 34, 35, 38, and 39, and calculates an absolute position based on the detection signals of the photo interrupters 38 and 39, and also computes the swinging direction or amount of the first and second driving levers 5 and 6, that is, the moving direction and amount (moving angle) of the operating lever 7 from the detecting signals of the first and second photo interrupters 34 and 35 using the absolute position as a reference. In addition, the control unit 40 determines control signals based on data or programs stored in the memory, and outputs the control signals to the first and second rotary motors 15 and 16. The control signals are signals corresponding to operation feeling supplied to the operating lever 7, which generates vibrations or changes actuation force (resistance or thrusting force), etc. Meanwhile, circuit components constituting the control unit 40 are mounted on a rear surface or the circuit substrate 33 or on another circuit substrate (not shown).

Next, the operation of the haptic feedback input device constructed as above will be described.

When the system of the haptic feedback input device is turned OFF, that is, when an ignition switch is turned OFF and thus power is in an OFF state, the movement of the operating lever 7 stops immediately after power is tuned OFF. In this state, when power is turned ON to operate the system, first, the control unit 40 determines the types of signals outputted from the photo interrupters 38 and 39. If the output signals from the photo interrupters 38 and 39 are ON, that is, the blocking portions 13a and 14a of the first and second swing arms 13 and 14 are located away from the recessed portions 38a and 39a and thus the light components from the LEDs are not received by the phototransistors, the control unit 40 rotates the first and second rotary motors 15 and 16 in a certain direction (for example, clockwise). Then, the first and second driving levers 5 and 6 begin to swing to the neutral positions thereof, and the blocking portions 13a and 14a move closer to the recessed portions 38a and 39a. When the blocking portions 13a and 14a enter the recessed portions 38a and 39a and thus the output signals from the photo interrupters 38 and 39 are switched into OFF from ON, the control unit 40 initializes the system with the present position of the operating lever as a reference position, and then stops first and second rotary motors 15 and 16.

On the other hand, in a case in which power is turned ON to operate the system, if the output signals from the photo interrupters 38 and 39 are OFF, that is, if the blocking portions 13a and 14a of the first and second swing arms 13 and 14 are located in the recessed portions 38a and 39a and the light components emitted from the LEDs are blocked by the blocking portions 13a and 14a not to be received by the phototransistors, the control unit 40 rotates the first and second rotary motors 15 and 16 counterclockwise. Then, the first and second driving levers 5 and 6 begin to swing to the neutral position, and the blocking portions 13a and 14a move away from the recessed portions 38a and 39a. When the blocking portions 13a and 14a pass through the recessed portions 38a and 39a so that the output signals from the photo interrupters 38 and 39 are switched into ON from OFF, the control unit 40 initializes the system with the present position of the operating lever as a reference position, and stops the first and second rotary motors 15 and 16.

Therefore, when the system is operated, the operating lever 7 automatically return to the neutral position irrespective of the previous state, and the operator can move the operating lever 7 standing at the neutral position in any direction to select a device to be controlled or to adjust the function of device. When the operator moves a joystick in a certain direction from the neutral position, the first and second driving levers 5 and 6 swing around their swinging shafts in accordance with the moving direction of the operating lever 7. For example, when the operating lever 7 is moved in the Y-Y direction in FIG. 7, only the first driving lever 5 swings in the Y-Y direction. When the operating lever 7 is moved in the X-X direction, only the second driving lever 6 swings in the X-X direction. In addition, when the operating lever 7 is moved in the X-Y direction (the direction between the X and Y directions), the first and second driving levers 5 and 6 swing together. In this case, the swinging motion of the first driving lever 5 is accelerated by the gear 17, the front end pulley 19, the belt 22, and the rear end pulley 20, and is then transmitted to the first code plate 21 from the teeth portion 5c of the gear portion 5b. In addition, the swinging motion of the second driving lever 6 is accelerated by the gear 18, the front end pulley 23, the belt 26, and the rear end pulley 24, and is than transmitted to the second code plate 25 from the teeth portion 6c of the gear portion 6b. Thus, the photo interrupters 34 and 35 of the first and second rotary encoders 36 and 37 respectively output two types of pulse signals having a phase difference of 90 degrees, and the pulse signals are inputted to the control unit 40 as relative position information.

The control unit 40 computes the swinging direction and amount of the first and second driving levers 5 and 6, based on a relative position obtained from the respective photo interrupters 34 and 35 of the first and second rotary encoders 36 and 37 and an absolute position obtained from the ON/OFF signals of the photo interrupters 38 and 39, and outputs predetermined control signals to the first and second rotary motors 15 and 16. For example, when the operating lever 7 is moved in a certain direction by a certain amount, the rotary motions of the first and second rotary motors 15 and 16 are decelerated by the gears 17 and 18 and the gear portions 5b and 6b, and is then transmitted to the first and second driving levers 5 and 6. Then, when actuation force that resists the movement direction of the operating lever 7 is supplied to the operating lever 7 via the first and second driving levers 5 and 6, the operator operating the operating lever 7 by hand can feel this actuation force as a click sense.

According to the present embodiment, the haptic feedback input device includes the operating lever 7 that is manually operated by an operator; the first and second driving levers 5 and 6 which can swing in conjunction with the rocking movement of the operating lever 7 and whose swinging shafts are perpendicular to each other; the first and second rotary encoders 36 and 37 that detect the swinging motions of the first and second driving levers 5 and 6 through the accelerating and decelerating gear trains; the first and second rotary motors 15 and 16 that apply feedback force to the operating lever 7 via the first and second driving levers 5 and 6; and the control unit 40 that controls the first and second rotary motors 15 and 16 based on detection signals outputted from the first and second rotary encoders 36 and 37. In the haptic feedback input device, the leaf springs 10 and 12, which is a first friction resistance supplying unit, steadily supply friction resistance to the first and second driving levers 5 and 6, and the tensioners 27 and 30, which is a second friction resistance supplying unit, steadily supply friction resistance to the belts 22 and 26 provided in the acceleration gear train. Therefore, resistance force is applied to the operating member 7 manually operated by an operator even when the first and second rotary motors 15 and 16 are not controlled in time, and the resistance force becomes large even right after the speed varies. Thus, the influence of delay in supplying feedback force to the operating member 7 from the first and second rotary motors 15 and 16 can be alleviated. In addition, the time lag until feedback force is fed back to the operating member 7 during operation can be decreased.

As described above, according to the haptic feedback input device of the invention, since the friction resistance supplying unit steadily supplies friction resistance to the movable member moving in conjunction with the manual operation of the operating member, resistance force is supplied to the operating member even when the control of the actuators is delayed, and the resistance force is large even right after the speed of the operating member varies. Therefore, the influence of delay in supplying feedback force to the operating member from the actuators can be alleviated, and the time lag until feedback force is fed back to the operating member during the manual operation can be decreased.

## Claims

1. A haptic feedback input device comprising:
an operating member (7) manually operated by an operator;
a moveable member (5, 6);
a base (4) that supports the operating member (7) free to move;
a displacement detecting unit (36, 37) that detect the displacement amount of the operating member (7);
an actuator (15, 16) that applies feedback force to the operating member (7); a control unit (40) that controls the actuator (15, 16) based on output signals from the displacement detecting units (36, 37); and
a friction resistance supplying unit (10, 12; 9a, 9b; 11a, 11b) that steadily supplies friction resistance to the movable member,
**characterized in that** said moveable member (5, 6) is adapted to swing in conjunction with the manual operation of the operating member (7), that a bearing (9a, 9b; 11a, 11b) supports a swinging shaft of the moveable member (5, 6), and
the friction resistance supplying unit (10, 12; 9a, 9b; 11a, 11b) is composed of a leaf spring (10, 12) and said bearing 9a, 9b; 11a, 11b) that are pressed on the swinging shaft of the movable member (5, 6).

2. The haptic feedback input device according to claim 1,
**characterized in that** a rotation transmitting mechanism is respectively provided between the operating member (7) and the displacement detecting unit (36, 37), and the rotation transmitting mechanism has a pair of pulleys (19, 20, 23, 24) coupled with each other via a belt (22, 26), and
a tensioner that applies tension to the belt (22, 26) forms a further friction resistance supplying unit (36, 37).

3. The haptic feedback input device according to any of claims 1 to 2,
**characterized in that** the operating member (7) is composed of an operating lever free to move, and the moveable member is constituted by
a driving lever (5, 6) that swings in conjunction with the operation of the operating lever and is journaled at the base (4).

4. The haptic feedback input device according to any of claims 1 to 3,
**characterized in that** the leaf spring (10, 12) urges the bearing against the swinging shaft of the moveable member.

5. The haptic feedback input device according to claim 3,
**characterized in that** the actuator (15, 16) is a rotary motor that applies feedback force to the operating lever via the driving lever (5, 6), and the rotary motor is coupled with the driving lever (5, 6) via a deceleration gear train.

6. The haptic feedback input device according to any of claims 2 to 5,
**characterized in that** the displacement detecting unit (36, 37) is a rotary encoder, and
the rotation transmitting mechanism is provided between a code plate (21, 25) of the rotary encoder and the driving lever (5, 6).

## Patentansprüche

1. Eingabevorrichtung mit haptischer Rückkopplung, aufweisend:
ein Betätigungselement (7), das durch eine Bedienungsperson von Hand zu betätigen ist;
ein bewegliches Element (5, 6);
eine Basis (4), die das Betätigungselement (7) frei beweglich abstützt;
eine Verlagerunsdetektionseinheit (36, 37), die den Verlagerungsbetrag des Betätigungselements (7) detektiert;
einen Aktuator (15, 16), der eine Rückkopplungskraft auf das Betätigungselement (7) aufbringt;
eine Steuereinheit (40), die den Aktuator (15, 16) auf der Basis von Ausgangssignalen von der Verlagerungsdetektionseinheit (36, 37) steuert; und
eine Reibungswiderstand-Zuführeinheit (10, 12, 9a, 9b; 11a, 11b), die dem beweglichen Element in stabiler Weise Reibungswiderstand zuführt,
**dadurch gekennzeichnet, dass** das bewegliche Element (5, 6) dazu ausgebildet ist, in Verbindung mit der manuellen Betätigung des Betätigungselements (7) eine Schwenkbewegung auszuführen, dass ein Lager (9a, 9b; 11a, 11 b) eine Schwenkachse des beweglichen Elements (5, 6) abstützt, und dass die Reibungswiderstand-Zuführeinheit (10, 12; 9a, 9b; 11 a, 11 b) aus einer Blattfeder (10, 12) und dem Lager (9a, 9b; 11a, 11 b) gebildet ist, die auf die Schwenkachse des beweglichen Elements (5, 6) gepresst sind.

2. Eingabevorrichtung mit haptischer Rückkopplung nach Anspruch 1,
**dadurch gekennzeichnet, dass** ein Rotationsübertragungsmechanismus jeweils zwischen dem Betätigungselement (7) und der Verlagerungsdetektionseinheit (36, 37) vorgesehen ist und der Rotationsübertragungsmechanismus ein Paar Riemenscheiben (19, 20, 23, 24) aufweist, die über einen Riemen (22, 26) miteinander gekoppelt sind, und dass eine Spanneinrichtung, die Spannung auf den Riemen (22, 26) aufbringt, eine weitere Reibungswiderstand-Zuführeinheit (36, 37) bildet.

3. Eingabevorrichtung mit haptischer Rückkopplung nach einem der Ansprüche 1 und 2,
**dadurch gekennzeichnet, dass** das Betätigungselement (7) durch einen frei beweglichen Betätigungshebel gebildet ist und das bewegliche Element durch einen Antriebshebel (5, 6) gebildet ist, der in Verbindung mit der Betätigung des Betätigungshebels eine Schwenkbewegung ausführt und an der Basis (4) gelagert ist.

4. Eingabevorrichtung mit haptischer Rückkopplung nach einem der Ansprüche 1 bis 3,
**dadurch gekennzeichnet, dass** die Blattfeder (10, 12) das Lager gegen die Schwenkachse des beweglichen Elements drückt.

5. Eingabevorrichtung mit haptischer Rückkopplung nach Anspruch 3,
**dadurch gekennzeichnet, dass** es sich bei dem Aktuator (15, 16) um einen Drehmotor handelt, der über den Antriebshebel (5, 6) eine Rückkopplungskraft auf den Betätigungshebel aufbringt, und dass der Drehmotor mit dem Antriebshebel (5, 6) über einen Untersetzungs-Getriebezug gekoppelt ist.

6. Eingabevorrichtung mit haptischer Rückkopplung nach einem der Ansprüche 2 bis 5,
**dadurch gekennzeichnet, dass** es sich bei der Verlagerungsdetektionseinheit (36, 37) um einen Drehcodierer handelt, und dass der Rotationsübertragungsmechanismus zwischen einer Codeplatte (21, 25) des Drehcodierers und dem Antriebshebel (5, 6) vorgesehen ist.

## Revendications

1. Dispositif d'entrée à retour haptique comprenant :
un élément de commande (7) manipulé par un opérateur ;
un élément mobile (5, 6) ;
une base (4) qui supporte l'élément de commande (7) en le laissant libre de ses mouvements ;
une unité de détection de déplacements (36, 37) qui détecte le degré de déplacement de l'élément de commande (7) ;
un actionneur (15, 16) qui applique un retour de force à l'élément de commande (7) ;
une unité de commande (40) qui commande l'actionneur (15, 16) d'après des signaux de sortie provenant des unités de détection de déplacements (36, 37) ; et
une unité fournissant une résistance par frottement (10, 12 ; 9a, 9b ; 11a, 11b) qui fournit sans interruption une résistance par frottement à l'élément mobile,
**caractérisé en ce que** ledit élément mobile (5, 6) est adapté pour pivoter en association avec la manipulation de l'élément de commande (7), **en ce qu'**un roulement (9a, 9b ; 11a, 11b) supporte un axe pivotant de l'élément mobile (5, 6), et **en ce que** l'unité fournissant une résistance par frottement (10, 12 ; 9a, 9b ; 11a, 11b) est composée d'un ressort à lame (10, 12) et dudit roulement (9a, 9b ; 11a, 11b) qui sont pressés sur l'axe pivotant de l'élément mobile (5, 6).

2. Dispositif d'entrée à retour haptique selon la revendication 1, **caractérisé en ce qu'**un mécanisme de transmission de rotation est prévu respectivement entre l'élément de commande (7) et l'unité de détection de déplacements (36, 37), et le mécanisme de transmission de rotation comporte une paire de poulies (19, 20, 23, 24) couplées entre elles par l'intermédiaire d'une courroie (22, 26), et
un tendeur qui applique une tension à la courroie (22, 26) forme une unité fournissant une résistance par frottement (36, 37) supplémentaire.

3. Dispositif d'entrée à retour haptique selon l'une quelconque des revendications 1 à 2, **caractérisé en ce que** l'élément de commande (7) se compose d'un levier de commande libre de se mouvoir, et l'élément mobile est constitué par un levier d'entraînement (5, 6) qui pivote en association avec l'actionnement du levier de commande et qui est monté sur palier au niveau de la base (4).

4. Dispositif d'entrée à retour haptique selon l'une quelconque des revendications 1 à 3, **caractérisé en ce que** le ressort à lame (10, 12) pousse le roulement contre l'axe pivotant de l'élément mobile.

5. Dispositif d'entrée à retour haptique selon la revendication 3, **caractérisé en ce que** l'actionneur (15, 16) est un moteur rotatif qui applique un retour de force au levier de commande par l'intermédiaire du levier d'entraînement (5, 6), et le moteur rotatif est couplé au levier d'entraînement (5, 6) par l'intermédiaire d'un train d'engrenages réducteur.

6. Dispositif d'entrée à retour haptique selon l'une quelconque des revendications 2 à 5, **caractérisé en ce que** l'unité de détection de déplacements (36, 37) est un codeur rotatif, et le mécanisme de transmission de rotation est placé entre une plaque à code (21, 25) du codeur rotatif et le levier d'entraînement (5, 6).
